# EUROPÄISCHE PATENTANMELDUNG

(11) **EP 4 721 847 A2**
(43) Veröffentlichungstag der Anmeldung: **08.04.2026**
(21) Anmeldenummer: 25206255.9
(22) Anmeldetag: 02.10.2025
(51) Int. Cl.: B01F 25/10, B01F 25/433, C02F 1/00

(54) **VORRICHTUNG ZUM VERWIRBELN VON FLUIDEN**

(30) Priorität: 02.10.2024 DE 102024128590
(71) Anmelder: Aquadea GmbH, 85254 Sulzemoos (DE)
(72) Erfinder: HABERMEIER, Werner, 86316 Friedberg (DE)
(74) Vertreter: 2SPL Patentanwälte PartG mbB

(57) **Zusammenfassung**

Eine Vorrichtung zum Verwirbeln von Fluiden umfasst eine Wirbelkammer (110), die eine Eingangsöffnung (112) in einer Seitenfläche und eine Ausgangsöffnung (114) in einer Bodenfläche aufweist; und eine Zuführungsstruktur zur Zuführung von Fluid an die Eingangsöffnung der Wirbelkammer, wobei die Zuführungsstruktur einen Zuführungskanal (120) aufweist, der länger als ein durchschnittlicher Innenradius (R) der Wirbelkammer ist, wobei ein Querschnitt einer Eingangsöffnung (E) des Zuführungskanals größer als ein Querschnitt einer Ausgangsöffnung (A) des Zuführungskanals ist, wobei die Ausgangsöffnung des Zuführungskanals mit der Eingangsöffnung der Wirbelkammer verbunden ist.

## Beschreibung

### Technisches Gebiet

Die vorliegende Offenbarung betrifft die Nutzung von Wirbelkammern zum Verwirbeln von Fluiden.

### Hintergrund

Wirbelkammern werden häufig eingesetzt, um Fluide durch gezielte Verwirbelung effizient zu mischen oder aufzubereiten. Die Grundidee der Wirbelkammer besteht darin, eine strömende Flüssigkeit oder ein Gas in eine rotierende Bewegung zu versetzen, wodurch Zentrifugal- und Scherkräfte entstehen, die die Durchmischung und Verteilung der Bestandteile optimieren. Diese Verwirbelung führt zu einer Erhöhung der Grenzfläche zwischen den unterschiedlichen Phasen oder Komponenten eines Fluids.

Durch die Verwirbelung in Wirbelkammern kann die Tröpfchengröße von Flüssigkeiten deutlich reduziert werden, was zu einer erheblich größeren Gesamtoberfläche des Fluids führt. Dadurch kann die Effektivität der Durchmischung oder Aufbereitung gesteigert werden, da kleinere Tröpfchen eine schnellere Reaktions- und Austauschgeschwindigkeit ermöglichen.

In bestehenden Wirbelkammern sind die Wirbelgeschwindigkeiten und Molekülgeschwindigkeiten bei Fluiden und Gasen begrenzt.

### Zusammenfassung

Es besteht Bedarf für ein Konzept zur Verbesserung der Verwirbelung von Fluiden mit Wirbelkammern.

Dieser Bedarf wird durch eine Vorrichtung zum Verwirbeln von Fluiden nach einem der Ansprüche gedeckt.

Einige Beispiele beziehen sich auf eine Vorrichtung zum Verwirbeln von Fluiden. Die Vorrichtung umfasst eine Wirbelkammer, die eine Eingangsöffnung in einer Seitenfläche und eine Ausgangsöffnung in einer Bodenfläche aufweist. Ferner umfasst die Vorrichtung eine Zuführungsstruktur zur Zuführung von Fluid an die Eingangsöffnung der Wirbelkammer. Die Zuführungsstruktur weist einen Zuführungskanal auf, der länger als ein durchschnittlicher Innenradius der Wirbelkammer ist. Ein Querschnitt einer Eingangsöffnung des Zuführungskanals ist größer als ein Querschnitt einer Ausgangsöffnung des Zuführungskanals und die Ausgangsöffnung des Zuführungskanals ist mit der Eingangsöffnung der Wirbelkammer verbunden.

Weitere Beispiele beziehen sich auf eine Vorrichtung zum Verwirbeln von Fluiden. Die Vorrichtung umfasst eine Wirbelkammer, die eine Eingangsöffnung in einer Seitenfläche und eine Ausgangsöffnung in einer Bodenfläche aufweist. Ferner umfasst die Vorrichtung eine Zuführungsstruktur zur Zuführung von Fluid an die Eingangsöffnung der Wirbelkammer. Die Zuführungsstruktur weist einen Zuführungskanal auf, der länger als ein durchschnittlicher Innenradius der Wirbelkammer ist. Ferner ist der Zuführungskanal spiralförmig.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
- Fig. 1: einen schematischen Querschnitt einer Vorrichtung zum Verwirbeln von Fluiden;
- Fig. 2: einen schematischen Querschnitt einer Vorrichtung zum Verwirbeln von Fluiden;
- Fig. 3: eine schematische Draufsicht auf eine Vorrichtung zum Verwirbeln von Fluiden; und
- Fig. 4: einen schematischen Querschnitt einer Wirbelkammer.

### Beschreibung

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

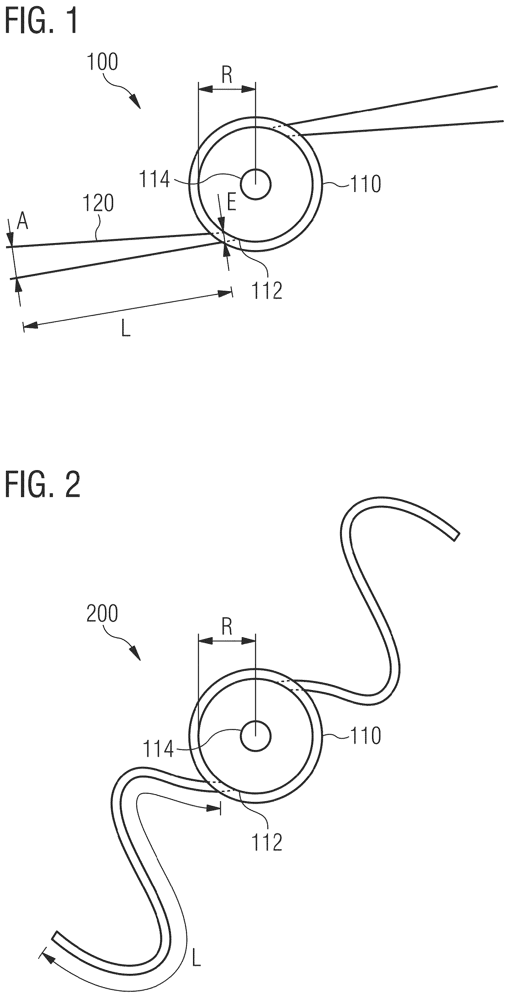

Fig. 1 zeigt einen schematischen Querschnitt einer Vorrichtung zum Verwirbeln von Fluiden. Die Vorrichtung 100 umfasst eine Wirbelkammer 110, die eine Eingangsöffnung 112 in einer Seitenfläche und eine Ausgangsöffnung 114 in einer Bodenfläche aufweist. Ferner umfasst die Vorrichtung eine Zuführungsstruktur zur Zuführung von Fluid an die Eingangsöffnung der Wirbelkammer. Die Zuführungsstruktur weist einen Zuführungskanal 120 auf, der länger als ein durchschnittlicher Innenradius R der Wirbelkammer 110 ist. Ein Querschnitt einer Eingangsöffnung E des Zuführungskanals ist größer als ein Querschnitt einer Ausgangsöffnung A des Zuführungskanals 120 und die Ausgangsöffnung des Zuführungskanals 120 ist mit der Eingangsöffnung 112 der Wirbelkammer verbunden.

Durch die Verwendung eines sich verengenden Zuführungskanals kann die Wirbelgeschwindigkeiten und/oder Molekülgeschwindigkeiten von Fluiden in der Wirbelkammer erhöht werden. Dadurch kann beispielsweise eine bessere und/oder feinere Vermischung von Fluiden, eine erhöhte Einlagerungskraft von Gasen, eine gleichmäßigere und/oder höhere Teilchengeschwindigkeit, ein höherer Sog, eine kleinere Tröpfchengröße, eine größere innere Oberfläche, eine stärkere Auflösung von größeren Molekülverbünden (z.B. Cluster) und/oder eine höhere Flussgeschwindigkeit des austretenden Fluids erreicht werden.

Der Zuführungskanal 120 kann die vorgeschlagene Geometrie aufweisen, um den Druck zu erhöhen mit der das Fluid in die Wirbelkammer tritt oder um bereits eine Rotation oder Bewegung mitzugeben, die die Fluidgeschwindigkeit und/oder Rotationsgeschwindigkeit und/oder Molekülgeschwindigkeiten in der Wirbelkammer 110 erhöht.

Der Zuführungskanal 120 weist eine sich verengende Geometrie von der Eingangsöffnung zu der Ausgangsöffnung auf. Der Querschnitt des Zuführungskanals 120 kann sich kontinuierlich (z.B. ohne sprunghafte Verjüngung) oder linear von der Eingangsöffnung zu der Ausgangsöffnung verjüngen. Alternativ kann der Zuführungskanal 120 an einer inneren Oberfläche eine Mehrzahl von Vorsprüngen und Vertiefungen aufweisen, sodass sich der Querschnitt des Zuführungskanals 120 auf dem Weg von der Eingangsöffnung zu der Ausgangsöffnung auch lokal vergrößern kann, sodass sich zwar insgesamt eine Verengung ergibt, die Verjüngung jedoch nicht kontinuierlich oder linear ist.

Der Querschnitt der Eingangsöffnung E des Zuführungskanals 120 kann größer als 1,5 mal (oder größer als 1,2 mal, größer als 2 mal oder größer als 3 mal) und/oder kleiner als 7 mal (oder kleiner als 5 mal, kleiner als 3 mal oder kleiner als 2 mal) der Querschnitt der Ausgangsöffnung A des Zuführungskanals 120 sein. Beispielsweise kann die Verbesserung bei Werten von größer als 1,5 und kleiner als 7 am größten sein.

Der Zuführungskanal 120 kann trichterförmig und/oder spiralförmig und/oder hyperbolisch enger werdend sein. Der Zuführungskanal 120 kann eine gebogene Trichterform aufweisen (z.B. mit gekrümmter Trichtermittenachse). Bei einem spiralförmigen Zuführungskanal 120 kann sich eine Windung der Spirale des Zuführungskanals 120 von einer Außenwand (z.B. Seitenwand mit Eingangsöffnung) der Wirbelkammer 110 bis zu einem Abstand von der Außenwand der Wirbelkammer von mindestens 1 mal (oder mindestens 2 mal oder mindestens 5 mal) dem durchschnittlichen Innenradius R der Wirbelkammer 110 erstreckt.

Der Zuführungskanal 120 kann länger als 3 mal (oder länger als 5 mal oder länger als 10 mal) der durchschnittliche Innenradius R der Wirbelkammer 110 und/oder kürzer als 20 mal (oder kürzer als 10 mal oder kürzer als 5 mal) der durchschnittliche Innenradius R der Wirbelkammer 110 sein. Es kann beispielsweise erst ab einer Länge von 1 mal dem durchschnittlichen Innenradius R der Wirbelkammer zu einer signifikanten Verbesserung kommen und bei einem Wert von mehr als 3 deutlich ausgeprägter sein.

Die Länge L des Zuführungskanals 120 entspricht beispielswiese einem Abstand der Eingangsöffnung von der Ausgangsöffnung entlang des Zuführungskanals 120. Der durchschnittlichen Innenradius R der Wirbelkammer 110 ist beispielsweise der gemittelte Radius eines Querschnitts der Wirbelkammer 110 und/oder der gemittelte Radius über einen Längsschnitt der Wirbelkammer 110. Der Radius ist beispielsweise konstant für einen kreisförmigen Querschnitt und eine zylinderförmige Wirbelkammer 110 und variiert für einen ellipsenförmigen Querschnitt und eine tonnenförmige Wirbelkammer 110.

Die Ausgangsöffnung des Zuführungskanals 120 kann mit der Eingangsöffnung 112 der Wirbelkammer 110 durch eine Klebeverbindung, eine Lötverbindung, eine Schraubverbindung oder über ein Verbindungselement der Zuführungsstruktur zwischen dem Zuführungskanal 120 und einer Seitenwand der Wirbelkammer 110 verbunden sein.

Die Zuführungsstruktur kann neben dem Zuführungskanal 110 auch ein Verbindungselement zwischen dem Zuführungskanal 110 und der Wirbelkammer 110 und/oder eine Verbindung zu einem Fluidanschluss (z.B. Anschluss eines Duschkopfs) der Vorrichtung 100 zum Anschluss einer externen Fluidzuführung (z.B. Duschschlauch) aufweisen.

Ein Fluid ist ein Stoff, der die Eigenschaft besitzt, sich unter Einwirkung einer äußeren Kraft kontinuierlich zu verformen, ohne dabei einen festen Zustand anzunehmen. Ein Fluid ist beispielsweise eine Flüssigkeit oder ein Gas. Fluide reagieren auf Druckänderungen, Temperaturunterschiede und Scherkräfte, wodurch sie sich leicht mischen und strömen lassen.

Eine Wirbelkammer 110 ist ein Bauteil, das zur gezielten Erzeugung einer rotierenden Strömung von Fluiden eingesetzt wird. Ihre Hauptfunktion besteht darin, durch eine kreisförmige Bewegung von Gasen oder Flüssigkeiten eine intensive Durchmischung und Verwirbelung zu erzeugen. Dies wird erreicht, indem das Fluid meist tangential in die Kammer eingespeist wird, wodurch es eine spiralförmige Bahn entlang der Wände der Kammer nimmt. Die dabei entstehenden Zentrifugalkräfte können bewirken, dass das Fluid mit hoher Geschwindigkeit rotiert und sich eine gleichmäßige Verteilung von Partikeln oder Temperaturunterschieden innerhalb des Fluids einstellt. Im Zentrum der Kammer entsteht durch den Wirbel ein Unterdruck, der das Fluid z.B. zu einer zentralen Auslassöffnung zieht. Durch diesen Wirbelprozess kann das Fluid effizient gemischt und/oder aufbereitet und/oder verwirbelt werden.

Die Wirbelkammer 110 weist beispielswiese einen runden oder elliptischen Querschnitt auf. Die Wirbelkammer 110 ist beispielswiese zylinderförmig oder tonnenförmig.

Die Eingangsöffnung 112 der Wirbelkammer 110 ist beispielsweise ein Loch in der Seitenfläche oder Seitenwand der Wirbelkammer 110, das sich von einer Außenseite der Wirbelkammer 110 bis zu einer Innenseite der Wirbelkammer 110 durch die Seitenwand der Wirbelkammer 110 erstreckt. Die Eingangsöffnung 112 der Wirbelkammer kann beispielsweise rechtwinklig oder tangential in die Wirbelkammer 110 führen. Eine Eingangsöffnung 112, die das Fluid in tangentialer Richtung zu einer Innenfläche der Seitenwand der Wirbelkammer 110 einströmen lässt, kann zu einer Erhöhung der Wirbelgeschwindigkeit und/oder der Molekülgeschwindigkeit des Fluids in der Wirbelkammer führen. Die Ausgangsöffnung 114 ist beispielsweise ein Loch in einer Bodenfläche oder in dem Boden der Wirbelkammer 110 (oder in einer dem Boden gegenüberliegenden Fläche), das sich von einer Außenseite der Wirbelkammer 110 bis zu einer Innenseite der Wirbelkammer 110 durch den Boden der Wirbelkammer 110 erstreckt. Die Ausgangsöffnung 114 der Wirbelkammer hat beispielsweise eine maximale Ausdehnung (z.B. einen Durchmesser) von weniger als der Innenradius der Wirbelkammer oder weniger als 80% (oder weniger als 50%) des Innenradius der Wirbelkammer und/oder mehr als 10% (oder mehr als 30% oder mehr als 50%) des Innenradius der Wirbelkammer. Die Ausgangsöffnung 114 der Wirbelkammer hat beispielsweise einen maximalen Querschnitt, der kleiner als 50% (oder kleiner als 30%, kleiner als 20% oder kleiner als 10%) eines Querschnitts der Wirbelkammer ist.

Der Zuführungskanal 120 kann an einer inneren Oberfläche eine Mehrzahl von Vorsprüngen und Vertiefungen aufweisen. Die Vorsprünge und/oder Vertiefungen können eine Höhe oder Tiefe von weniger als 50% (oder weniger als 20% oder weniger als 10%) und/oder mehr als 5% (mehr als 10% oder mehr als 20%) eines durchschnittlichen Durchmessers des Zuführungskanals 120 an der Stelle des jeweiligen Vorsprungs oder der jeweiligen Vertiefung aufweisen. Die Vorsprünge und/oder Vertiefungen können eine spitze Geometrie aufweisen und/oder abwechselnd angeordnet sein. Durch diese Vorsprünge können eine große Anzahl von Mikro- und Nano-Wirbel kreiert werden, was zu einer Verbesserung oder Intensivierung bei Emulsionsprozessen führen kann.

Die Vorrichtung 100 kann eine weitere Zuführungsstruktur aufweisen, die einen weiteren Zuführungskanal aufweist. Die Wirbelkammer 110 kann eine weitere Eingangsöffnung aufweisen, die mit einer Ausgangsöffnung des weiteren Zuführungskanals verbunden ist. Der weitere Zuführungskanal kann dieselbe Geometrie, wie der erste Zuführungskanal, aufweisen. Die Eingangsöffnung und die weitere Eingangsöffnung können gegenüberliegend in der Seitenwand der Wirbelkammer 110 angeordnet sein. Die Vorrichtung 100 kann auch mehr als zwei Zuführungsstrukturen mit Zuführungskanälen aufweisen.

Die Wirbelkammer 110 kann an einer der Bodenfläche gegenüberliegenden Fläche einen Kristall aufweisen, der angeordnet ist, sodass zumindest ein Teil des Fluids beim Durchströmen der Wirbelkammer mit dem Kristall in Kontakt kommt. Kristalle können die Struktur der Fluidströmung verändern, indem sie bestimmte Schwingungen oder Resonanzen erzeugen, die die Fließdynamik des Fluids in der Kammer beeinflussen. Dadurch könnte die Verwirbelung verstärkt oder gezielt gesteuert werden. Je nach Material des Kristalls könnten bestimmte katalytische Eigenschaften hinzukommen, die chemische Reaktionen beschleunigen oder bestimmte Prozesse innerhalb des Fluids begünstigen. Kristall können das Fluid mit Mineralien anreichen, die der Kristall bei Kontakt mit dem Fluid abgeben. Der Kristall kann beispielsweise ein Rubin oder Diamant sein.

Einer der Bodenfläche gegenüberliegenden Fläche der Wirbelkammer 110 kann zumindest teilweise transparent sein. Beispielsweise kann die Fläche von einem Glaselement gebildet sein oder eine Öffnung haben, in der ein Glaselement oder ein Kristall angeordnet ist, der zumindest teilweise transparent ist. Die Vorrichtung 100 kann eine Lichtquelle aufweisen, die angeordnet und ausgelegt ist, um durch die zumindest teilweise transparente Fläche Licht (z.B. Infrarotlicht zum Erwärmen oder ultraviolettes Licht zum Reduzieren von Keimen oder Bakterien) in die Wirbelkammer einzubringen.

Die Vorrichtung 100 kann beispielsweise ein Duschkopf, ein Wasserhahn, eine Düngevorrichtung, eine Bewässerungsvorrichtung, eine Mischeinheit oder eine Luftreinigungsvorrichtung sein.

Weitere Einzelheiten und Aspekte werden im Zusammenhang mit den oben oder unten beschriebenen Beispielen erwähnt. Das in Fig. 1 gezeigte Beispiel kann ein oder mehrere optionale zusätzliche Merkmale umfassen, die einem oder mehreren Aspekten entsprechen, die im Zusammenhang mit dem vorgeschlagenen Konzept oder einem oder mehreren oben oder unten (z. B. Fig. 2-4) beschriebenen Beispielen erwähnt werden.

Fig. 2 zeigt einen schematischen Querschnitt einer Vorrichtung zum Verwirbeln von Fluiden. Die Vorrichtung 200 umfasst eine Wirbelkammer 110, die eine Eingangsöffnung 112 in einer Seitenfläche und eine Ausgangsöffnung 114 in einer Bodenfläche aufweist. Ferner umfasst die Vorrichtung 100 eine Zuführungsstruktur zur Zuführung von Fluid an die Eingangsöffnung der Wirbelkammer. Die Zuführungsstruktur weist einen Zuführungskanal 120 auf, der länger als ein durchschnittlicher Innenradius R der Wirbelkammer 110 ist. Ferner ist der Zuführungskanal 120 spiralförmig.

Durch die Verwendung eines spiralförmigen Zuführungskanals kann die Wirbelgeschwindigkeiten und/oder Molekülgeschwindigkeiten von Fluiden in der Wirbelkammer erhöht werden. Dadurch kann beispielsweise eine bessere und/oder feinere Vermischung von Fluiden, eine erhöhte Einlagerungskraft von Gasen, eine gleichmäßigere und/oder höhere Teilchengeschwindigkeit, ein höherer Sog, eine kleinere Tröpfchengröße, eine größere innere Oberfläche, eine stärkere Auflösung von größeren Molekülverbünden (z.B. Cluster) und/oder eine höhere Flussgeschwindigkeit des austretenden Fluids erreicht werden.

Der spiralförmige Zuführungskanal 120 kann einen konstanten Querschnitt entlang des Zuführungskanals 120 aufweisen, einen sich verjüngenden Querschnitt entlang des Zuführungskanals 120 aufweisen und/oder an einer inneren Oberfläche eine Mehrzahl von Vorsprüngen und Vertiefungen aufweisen.

Der spiralförmige Zuführungskanal 120 kann sich beispielsweise kontinuierlich um einen zentralen Punkt oder eine Achse winden und dabei in einem gleichmäßigen oder variablen Abstand (z.B. abnehmenden Abstand in Richtung zur Wirbelkammer) von diesem Zentrum verlaufen.

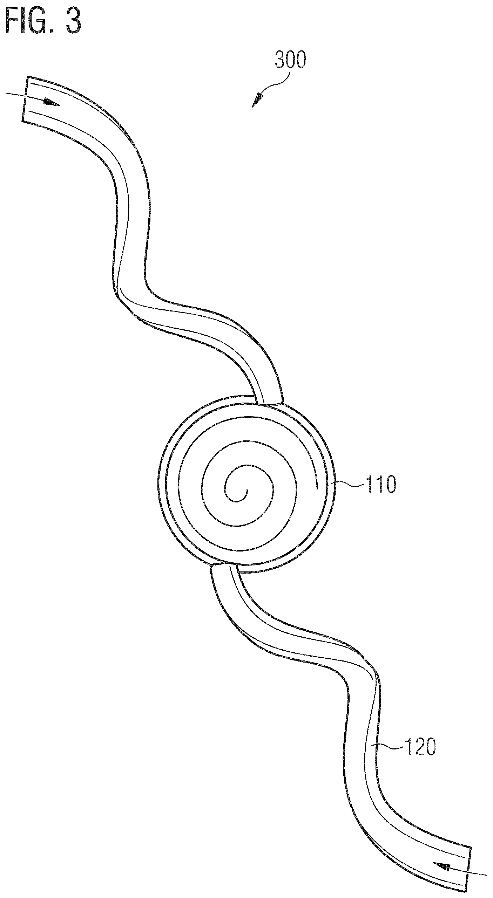

Weitere Einzelheiten und Aspekte werden im Zusammenhang mit den oben oder unten beschriebenen Beispielen erwähnt. Das in Fig. 2 gezeigte Beispiel kann ein oder mehrere optionale zusätzliche Merkmale umfassen, die einem oder mehreren Aspekten entsprechen, die im Zusammenhang mit dem vorgeschlagenen Konzept oder einem oder mehreren oben (z. B. Fig. 1) oder unten (z. B. Fig. 3-4) beschriebenen Beispielen erwähnt werden.

Fig. 3 zeigt eine schematische Draufsicht auf eine Vorrichtung zum Verwirbeln von Fluiden. Die Vorrichtung 300 weist eine Wirbelkammer 110 und einen spiralförmige Zuführungskanal 120 auf, wie in Zusammenhang mit Fig. 2 beschreiben, der zusätzlich einen Querschnitt einer Eingangsöffnung aufweist, der größer ist als ein Querschnitt einer Ausgangsöffnung, wie in Zusammenhang mit Fig. 1 beschreiben. Ferner umfasst die Vorrichtung 300 einen gegenüberliegenden weiteren Zuführungskanal, der in seiner Geometrie dem ersten Zuführungskanal 120 entspricht.

Der längere, trichterförmige Zulauf (z.B. Kudu-Hom-ähnlich 3-dimensional verdreht, enger werdend) kann an dem Einlass der Wirbelkammer angeordnet werden, um die Wirbelgeschwindigkeit und Molekülgeschwindigkeit in der Wirbelkammer zu erhöhen. Durch den langen, trichterförmigen Zulauf kann die Wirbelgeschwindigkeit erhöht werden, ohne Energie für Druckerhöhung aufwenden zu müssen.

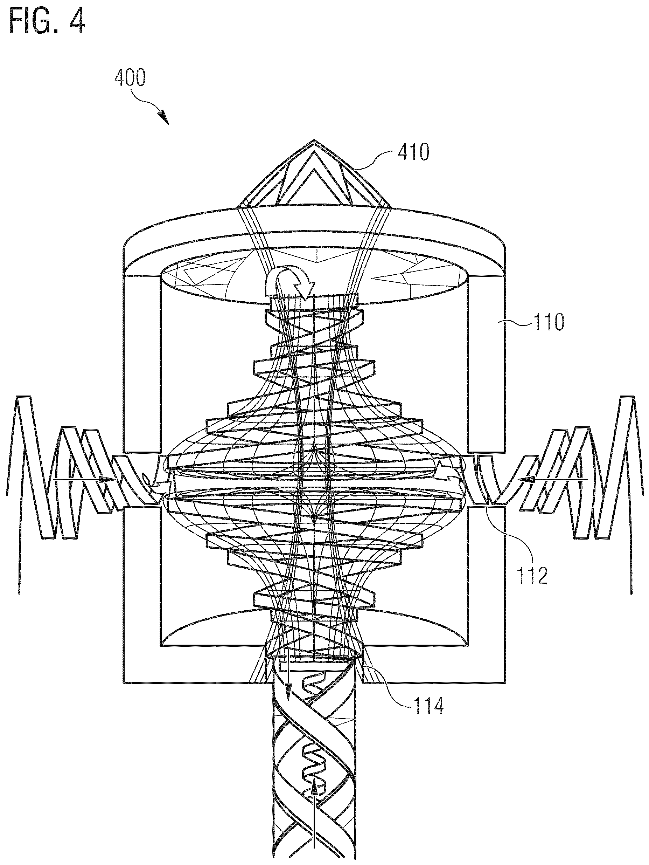

Weitere Einzelheiten und Aspekte werden im Zusammenhang mit den oben oder unten beschriebenen Beispielen erwähnt. Das in Fig. 3 gezeigte Beispiel kann ein oder mehrere optionale zusätzliche Merkmale umfassen, die einem oder mehreren Aspekten entsprechen, die im Zusammenhang mit dem vorgeschlagenen Konzept oder einem oder mehreren oben (z. B. Fig. 1-2) oder unten (z. B. Fig. 4) beschriebenen Beispielen erwähnt werden.

Fig. 4 zeigt einen schematischen Querschnitt einer Wirbelkammer. Eine zylinderförmige Wirbelkammer 110 mit zwei tangentialen Zuführungsöffnungen 112 und einer zentralen Auslassöffnung 114 dient zur intensiven Verwirbelung von Fluiden, um eine effektive Durchmischung oder andere prozesstechnische Effekte zu erzielen. Die Funktionsweise basiert auf der tangentialen Zufuhr von Fluiden in die Kammer, wodurch das Fluid entlang der Innenwand der Kammer in eine rotierende Bewegung versetzt wird. Diese Rotationsbewegung erzeugt Zentrifugalkräfte, die das Fluid zur Kammerwand drücken und einen stabilen Wirbelstrom erzeugen.

Durch die beiden tangentialen Zuführungsöffnungen wird die Strömung symmetrisch und gleichmäßig in die Kammer eingeführt, was zu einer gleichmäßigen Verwirbelung und höheren Strömungsgeschwindigkeit führt. Die rotierende Strömung erzeugt im Zentrum der Kammer einen Unterdruckbereich, der das Fluid schließlich durch die zentrale Auslassöffnung 114 nach außen führt.

Die zylinderförmige Wirbelkammer 110 kann an einem oberen Ende einen Kristall 410 aufweisen, mit dem das Fluid in Kontakt treten kann, wie in Zusammenhang mit Fig. 1 beschrieben.

Weitere Einzelheiten und Aspekte werden im Zusammenhang mit den oben oder unten beschriebenen Beispielen erwähnt. Das in Fig. 4 gezeigte Beispiel kann ein oder mehrere optionale zusätzliche Merkmale umfassen, die einem oder mehreren Aspekten entsprechen, die im Zusammenhang mit dem vorgeschlagenen Konzept oder einem oder mehreren oben (z. B. Fig. 1-3) oder unten beschriebenen Beispielen erwähnt werden.

Die beschriebenen Vorrichtungen können beispielsweise für Duschköpfe, für die Landwirtschaft (z.B. zum Ausbringen von Fluiden, wie Pflanzen-Stärkungs-Mittel), zur Bewässerung, zum Mischen von Fluiden und Gasen (z.B. um haltbarere Emulsionen herzustellen), zum Mischen von Fluiden oder Gasen mit feinen und feinsten Partikeln, für thermodynamische Prozesse, für Raketen-Triebwerke oder Raketenbrennkammer und/oder zur Luftreinigung verwendet werden. Beispielsweise kann in der Landwirtschaft eine höhere Wirksamkeit der eingesetzten Mittel bei geringerem Verbrauch (z.B. bessere Vermischung, kleinere Tröpfchengröße, größere innere Oberfläche), in der Bewässerung ein geringerer Wasserverbrauch durch feinere Benetzung oder bessere Bodendurchdringung (z.B. Kapillarwirkung), eine feinere Durchmischung von Fluiden, eine bessere Einlagerungen von Gasen in Fluiden in mikromolekularen Wirbel-Einheiten und/oder ein effizienterer Wärmeaustausch (z.B. Wärmeübergang) erreicht werden.

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

## Patentansprüche

1. Vorrichtung (100) zum Verwirbeln von Fluiden, die Vorrichtung umfassend:
eine Wirbelkammer (110), die eine Eingangsöffnung (112) in einer Seitenfläche und eine Ausgangsöffnung (114) in einer Bodenfläche aufweist; und
eine Zuführungsstruktur zur Zuführung von Fluid an die Eingangsöffnung der Wirbelkammer, wobei die Zuführungsstruktur einen Zuführungskanal (120) aufweist, der länger als ein durchschnittlicher Innenradius (R) der Wirbelkammer ist, wobei ein Querschnitt einer Eingangsöffnung (E) des Zuführungskanals größer als ein Querschnitt einer Ausgangsöffnung (A) des Zuführungskanals ist, wobei die Ausgangsöffnung des Zuführungskanals mit der Eingangsöffnung der Wirbelkammer verbunden ist, wobei sich der Querschnitt des Zuführungskanals kontinuierlich von der Eingangsöffnung zu der Ausgangsöffnung verjüngt.

2. Vorrichtung nach Anspruch 1, wobei der Zuführungskanal (120) trichterförmig ist.

3. Vorrichtung nach einem der vorhergehenden Ansprüche, wobei der Querschnitt der Eingangsöffnung (E) des Zuführungskanals größer als 1,5 mal und kleiner als 7 mal der Querschnitt der Ausgangsöffnung (A) des Zuführungskanals ist.

4. Vorrichtung nach einem der vorhergehenden Ansprüche, wobei der Zuführungskanal (120) spiralförmig ist.

5. Vorrichtung nach einem der vorhergehenden Ansprüche, wobei der Zuführungskanal (120) hyperbolisch enger werdend ist.

6. Vorrichtung nach Anspruch 4 oder 5, wobei sich eine Windung der Spirale des Zuführungskanals (120) von einer Außenwand der Wirbelkammer (110) bis zu einem Abstand von der Außenwand der Wirbelkammer von mindestens ein mal dem durchschnittlichen Innenradius (R) der Wirbelkammer erstreckt.

7. Vorrichtung nach einem der vorhergehenden Ansprüche, wobei der Zuführungskanal (120) länger als drei Mal der durchschnittliche Innenradius (R) der Wirbelkammer (110) ist.

8. Vorrichtung nach einem der vorhergehenden Ansprüche, wobei die Wirbelkammer (110) einen runden Querschnitt aufweist.

9. Vorrichtung nach einem der vorhergehenden Ansprüche, wobei die Wirbelkammer (110) zylinderförmig ist.

10. Vorrichtung nach einem der vorhergehenden Ansprüche, wobei die Wirbelkammer (110) an einer der Bodenfläche gegenüberliegenden Fläche einen Kristall (410) aufweist, der angeordnet ist, sodass zumindest ein Teil des Fluids beim Durchströmen der Wirbelkammer mit dem Kristall in Kontakt kommt.

11. Vorrichtung nach einem der vorhergehenden Ansprüche, wobei die Eingangsöffnung (112) der Wirbelkammer tangential in die Wirbelkammer (110) führt.

12. Vorrichtung nach einem der vorhergehenden Ansprüche, ferner umfassend eine weitere Zuführungsstruktur, die einen weiteren Zuführungskanal aufweist, wobei die Wirbelkammer (110) eine weitere Eingangsöffnung aufweist, die mit einer Ausgangsöffnung des weiteren Zuführungskanals verbunden ist.

13. Vorrichtung nach einem der vorhergehenden Ansprüche, wobei der Zuführungskanal (120) an einer inneren Oberfläche eine Mehrzahl von Vorsprüngen und Vertiefungen aufweist.

14. Vorrichtung (200) zum Verwirbeln von Fluiden, die Vorrichtung umfassend:
eine Wirbelkammer (110), die eine Eingangsöffnung (112) in einer Seitenfläche und eine Ausgangsöffnung (114) in einer Bodenfläche aufweist,
eine Zuführungsstruktur zur Zuführung von Fluid an die Eingangsöffnung der Wirbelkammer, wobei die Zuführungsstruktur einen Zuführungskanal (120) aufweist, der länger als ein durchschnittlicher Innenradius (R) der Wirbelkammer ist, wobei der Zuführungskanal spiralförmig ist.

15. Vorrichtung nach einem der vorhergehenden Ansprüche, wobei die Vorrichtung ein Duschkopf, ein Wasserhahn, eine Düngevorrichtung, eine Bewässerungsvorrichtung oder eine Luftreinigungsvorrichtung ist.
